# EUROPEAN PATENT SPECIFICATION

(11) **EP 4 391 325 B1**
(45) Date of publication and mention of the grant of the patent: **04.11.2026**
(21) Application number: 22216304.0
(22) Date of filing: 23.12.2022
(51) Int. Cl.: H02K 7/00, H02K 15/00, H02K 5/173, H02K 7/10

(54) **MOTOR HOLDER AND ROTOR SHAFT OF A KITCHEN APPLIANCE**
MOTORTRÄGER UND ROTORWELLE FÜR EIN KÜCHENGERÄT
SUPPORT DE MOTEUR ET ARBRE DE ROTOR D'APPAREIL DE CUISINE

(43) Date of publication of application: 26.06.2024
(73) Proprietor: BSH Hausgeräte GmbH, 81739 München (DE)
(72) Inventor: Potocnik, David, 3214 Zrece (SI); Pajk, Luka, 3000 Celje (SI)

(56) References cited:
- CN-B- 103 390 962
- CN-B- 107 516 980
- CN-U- 202 281 289
- US-A1- 2015 180 290

## Description

The present invention concerns a motor holder of a kitchen appliance. The invention further concerns a rotor shaft of an electric motor of a kitchen appliance. Moreover, the invention concerns a motor assembly comprising a motor holder and a rotor shaft, an electric motor comprising such motor assembly, and a kitchen appliance comprising such electric motor.

Electric kitchen appliances typically integrate at least one electric motor for driving a gear unit. Such gear unit may be designated to rotate at least one tool (such as a beater or a rotatable knife assembly) and/or a rotation system for a receptacle (for food to be processed) with increased output power.

The electric motor may further be configured to rotate a further tool, such as a blender, for example. Therein, a rotor shaft's end may be adapted to directly transfer torque (i.e., without a gear unit) to the further tool. For this purpose, a drive clutch screwed on said end of the electric motor's rotor shaft may engage with a corresponding clutch fastened to an element (such as a tool shaft) combined to the further tool.

Due to high loads and vibrations often occurring during operation of a kitchen appliance, in particular when rotating said further tool, such drive clutches wear off with working time of the kitchen appliance and, therefore, have to be replaced from time to time.

The documents CN 107 516 980 B, US 2015/180290 A1, CN 202 281 289 U, and CN 103 390 962 B are part of the relevant prior art on fixing the rotor shaft and/or with a hole in the shaft.

It is an object of the present invention to simplify the replacement of a drive clutch of a kitchen appliance.

The object is achieved by a motor holder according to claim 1, a rotor shaft according to claim 3, a motor assembly according to claim 6, an electric motor according to claim 11 and a kitchen appliance according to claim 12. Advantageous embodiments are disclosed in the dependent claims, the description and the figures.

A motor holder according to the present invention is intended for connecting, in a mounted state, an electric motor with a gear unit of a kitchen appliance. The motor holder forms a hole configured to be run through, in a mounted state of the motor holder, by a rotor shaft of the electric motor. That is, in said mounted state, the rotor shaft penetrates the motor holder by running through the hole. To prevent ambiguity, in the following, said hole is also denominated as "main hole" of the motor holder.

The motor holder according to the present invention further forms a passage for accessing the main hole and a rotor shaft with a tool, wherein the passage runs through an enclosure of the main hole. With respect to a centre axis of the main hole, the passage preferably runs in radial direction. It may preferably provide a straight connection of the main hole, in particular of the centre axis thereof, with a vicinity of the motor holder.

In particular, the passage thus facilitates access, through the motor holder, to the main hole and, therewith, in a mounted state, to the rotor shaft. Accordingly, the rotor shaft can be reached, even when assembled so as to run through the motor holder's main hole, with a tool such as a rod (e.g., a shaft of a screw driver) inserted into the passage. In particular, in combination with further means (such as an appropriate rotor shaft), the motor holder facilitates prohibiting a rotation of the rotor shaft in a secure and efficient manner, without blocking and thereby compromising other components (such as the gear unit or an impeller) of the kitchen appliance. As a consequence, a drive clutch screwed on the rotor shaft can be easily, safely and quickly replaced to maintain the functioning of the kitchen machine.

The rotor shaft may preferably be carried by at least one rolling-element bearing which may be arranged in a groove the motor holder may form in the enclosure of the hole. In the mounted state, a centre axis of the hole preferably coincides with a designated axis of rotation of the rotor shaft. The enclosure of the main hole may in particular be ring-shaped.

Radially outwards of the passage, in particular of the main hole's enclosure, the motor holder may further form an introductory path. Such introductory path may narrow towards the passage in the enclosure, and/or it may be shaped as a duct, which may be open in at least one axial direction (with respect to the centre axis of the main hole). Thereby, a secure guidance of a tool being introduced towards and into the passage is provided.

According to advantageous embodiments, in a position diametrically opposed to the position, a cavity is formed in the enclosure of the main hole. Thereby, if the rotor shaft forms an appropriate through-hole, the tool may radially penetrate the rotor shaft and enter the cavity opposed to the passage. The cavity may then have a stabilising function for the tool and may thereby provide for a particularly reliable prohibition of a rotation of the rotor shaft during replacement of the drive clutch.

Additionally or alternatively, said passage may be a first passage, and the motor holder may then form one or more further passage/s likewise running through the enclosure of the main hole, preferably providing a straight connection of the centre axis of the main hole with the vicinity of the motor holder.

Such further passage may preferably be located in a position which compared to a position of the first passage is pivoted about the centre axis of the main hole, e.g., about an angle of 180° (in which case the respective further passage therefore is diametrically opposed to the first passage) and/or 90°.

Such plurality of passages facilitates access to the rotor shaft from various sides of the kitchen appliance. Moreover, in case of diametrically opposed passages, analogously to what is explained above with respect to the cavity, if the rotor shaft forms an appropriate through-hole, the tool may radially penetrate the rotor shaft and thus run through both of the opposite passages. Thereby, the rotation of the rotor shaft can be prohibited in a particularly stable way.

A rotor shaft according to the present invention is intended as a rotor shaft of or for an electric motor of a kitchen appliance. It is designated to run through a main hole of a motor holder (such as of a motor holder according to an embodiment of the present invention) connecting the electric motor with a gear unit of the kitchen appliance; a region of the rotor shaft which in such assembled state is arranged in the main hole of the motor holder (and thus encompassed by the motor holder) is further referred to herein as a "seat region". At least a portion of the seat region may be combined to or itself form a (radially inner) race of a rolling-element bearing configured to rotatably support the rotor shaft in the main hole of the motor holder.

Therein, at least one orifice is formed in the rotor shaft according to the present invention.

The orifice thus permits the rotor shaft to be at least partially pierced by a tool such as a rod inserted into the orifice. Thereby, a rotation of the rotor shaft (about its designated axis of rotation) can be prohibited even in an assembled state of the rotor shaft. In such an easily and securely realised secured state of the rotor shaft, a drive clutch can respectively be twisted off or screwed on the rotor shaft for replacement, without compromising other components (such as the gear unit) of the kitchen appliance.

According to advantageous embodiments of a rotor shaft according to the present invention, the at least one orifice is formed in the rotor shaft's seat region or adjacent thereto (e.g., between the seat region and a worm the shaft may comprise for engaging with the gear unit).

Preferably, an edge of the orifice is chamfered, such that the orifice widens in a direction radially outwards (with respect to the designated axis of rotation). Such embodiments ease the introduction of a tool into the orifice.

With respect to a designated axis of rotation of the rotor shaft (which axis in the assembled state preferably coincides with a centre axis of the motor holder's main hole), the orifice preferably is a radial through-hole (thus, a diameter) running through the rotor shaft. Accordingly, a tool inserted into the orifice can be particularly stably held therein.

A motor assembly according to the present invention comprises a motor holder and a rotor shaft, each according to a respective embodiment of the present invention. Therein, the rotor shaft is associated to the motor holder, i.e., it is intended to run, in an assembled state, through the main hole of the motor holder connecting an electric motor comprising the rotor shaft with a gear unit. Preferably, in such assembled state, the rotor shaft is carried by at least one rolling-element bearing the motor assembly may comprise, which rolling bearing may at least partially be arranged in a groove the motor holder advantageously forms at an enclosure of the main hole.

In the designated position of the rotor shaft relative to the motor holder, the at least one orifice of the rotor shaft comprised by a motor assembly according to the present invention is adapted to meet, by rotation of the rotor shaft within the main hole and relative to the motor holder, the passage formed in the motor holder. In particular, the at least one orifice is advantageously formed in the seat region of the motor assembly's rotor shaft.

The positions of the motor holder's passage and the rotor shaft's orifice thus allow a tool such as rod to be introduced through the motor holder's passage into the rotor shaft's orifice. Accordingly, in the assembled state of rotor shaft and motor holder, the rotor shaft's orifice can be accessed, from the vicinity of the motor holder, with the tool, so as to inhibit a rotation of the rotor shaft when replacing a drive clutch screwed thereon, without compromising other components.

According to advantageous embodiments, the motor assembly further comprises an impeller with a sleeve fixed to the rotor shaft. Therein, the sleeve forms at least one channel which superimposes a respective one of the one or more orifice/s of the rotor shaft, i.e., which in radial direction (with respect to the designated axis of rotation) is positioned on a respective orifice.

Preferably, the sleeve surrounds at least a portion of the rotor shaft's seat region. In an assembled state of the motor assembly, in which state the rotor shaft runs through said main hole of the motor holder in a designated position relative to the motor holder, the sleeve of such embodiment therefore is at least partially arranged within the motor holder's main hole, in particular radially between the motor holder and a portion of the rotor shaft.

Such sleeve facilitates a secure fastening of the impeller to the rotor shaft, wherein the channel formed in the sleeve nonetheless maintains the above-mentioned accessibility of the rotor shaft by a tool, such as a rod, for inhibiting a rotation of the rotor shaft during replacement of a drive clutch.

Preferably, the at least one channel runs in radial direction with respect to the designated axis of rotation.

The sleeve may be at least partially covered by a ring-shaped cover having at least one clearance overlapping (in particular, being aligned with) the at least one channel formed by the sleeve.

Such cover may serve to protect the impeller during a process of assembling the impeller. It may in particular partially or entirely be made of metal. With respect to the designated axis of rotation, it may extend on a circumference of the sleeve and/or on an axial end of the sleeve. Due to the clearance/s overlapping with the at least one channel formed in the sleeve, the accessibility of the rotor shaft through the channel/s is maintained.

According to advantageous embodiments of the motor assembly according to the present invention, the impeller comprises at least one guiding rib extending radially (with respect to the designated axis of rotation) from a vicinity of the sleeve to the at least one channel. Such guiding rib may thus serve to guide a straight tool (e.g., a rod), when this is being inserted from the vicinity of the motor holder radially inwards towards the appropriately rotated rotor shaft, into the channel. In particular, the at least one guiding rib may preferably form a (smooth) sliding edge and/or a (smooth) sliding surface running from said vicinity of the sleeve into the respective channel thereof.

Advantageously, the impeller has one or more mark/s on its perimeter. Such mark/s indicate/s a respective position, of the at least one channel formed in the impeller's sleeve, in circumferential direction. For instance, the mark/s may be arranged on a same radius as a respective one of the at least one channel.

By such mark/s, a person intending to replace the drive clutch is supported in appropriately rotating the impeller and, therewith, the rotor shaft, such that the at least one passage formed in the motor holder, the at least one channel formed in the impeller's sleeve and the at least one orifice of the rotor shaft are arranged on a common (preferably radial) line and thus allow introduction of a tool from a circumference of the motor holder into (in respective embodiments even through) the at least one orifice of the rotor shaft, whereby a rotation of the rotor shaft relative to the motor holder can be inhibited.

In particular, the at least one mark may comprise at least one groove running in axial direction (with respect to the designated axis of rotation). Such groove simplifies catching, rotating and holding the impeller (and therewith, the rotor shaft) in an appropriate rotational position.

According to advantageous embodiments, the impeller is rotationally symmetric of finite order, such as of order 2, or of order 4, or of order 6, for example. In particular, it may comprise various channels which are uniformly distributed in circumferential direction of the impeller, and in respective embodiments comprising various marks, various guiding ribs and/or a cover with various clearances, the same may respectively hold for the marks, guiding ribs and/or clearances. Such embodiments eliminate balance disturbances in the electric motor, and they further provide for easily aligning the rotor shaft's orifice with the motor holder's passage when a tool is desired to be introduced to inhibit rotation of the rotor shaft.

An electric motor according to the present invention comprises a motor assembly according to an embodiment of the present invention, a stator, and a rotor fastened to the rotor shaft of the motor assembly.

A kitchen appliance according to the present invention comprises an electric motor according to an embodiment of the present invention, and a gear unit configured to be driven by the electric motor. In particular, the motor holder of the motor assembly comprised by the electric motor connects the latter to the gear unit. The kitchen appliance may in particular be a kitchen machine, such as an electric food processor or a multi-purpose kitchen appliance. Such kitchen machine may comprise a blender attachment configured to be driven by the rotor shaft of the motor assembly comprised by the electric motor. Therein, the blender attachment may be coupled to the rotor shaft by means of a coupling comprising a drive clutch screwed on the rotor shaft, and a blender's (counter)clutch engaging with the drive clutch.

In what follows, preferred embodiments of the present invention are explained with respect to the accompanying drawings. As is to be understood, the various elements and components are depicted as examples only, and they may be facultative and/or combined in a manner different than that depicted. Reference signs for related elements are used comprehensively and not defined again for each figure.

Shown is schematically in
- Fig. 1:: an exploded view of a motor assembly according to an exemplary embodiment of the present invention;
- Fig. 2:: a cross section of a motor assembly according to an exemplary embodiment of the present invention being pierced by a tool; and
- Fig. 3:: a portion of an exemplary embodiment of a kitchen appliance according to the present invention in a cross-sectional view.

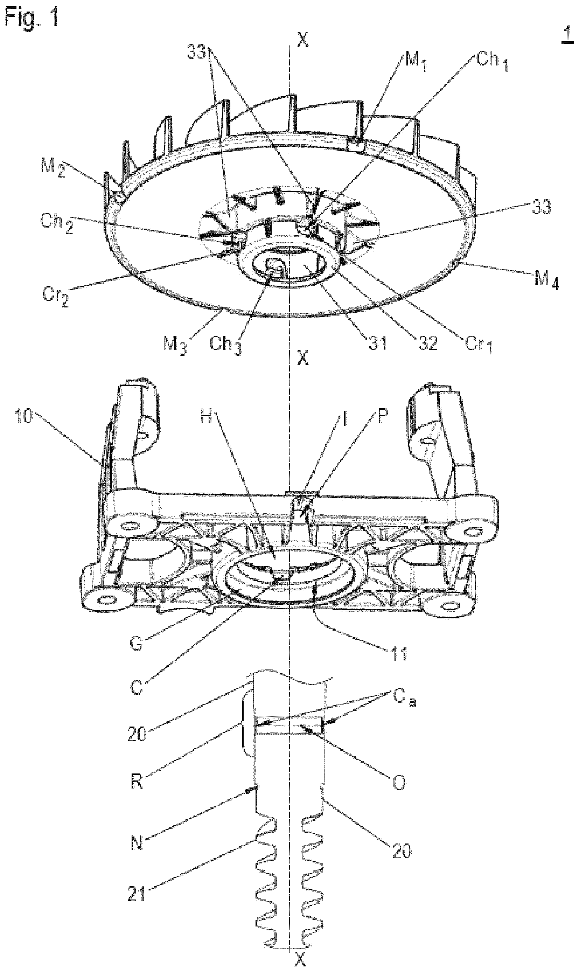

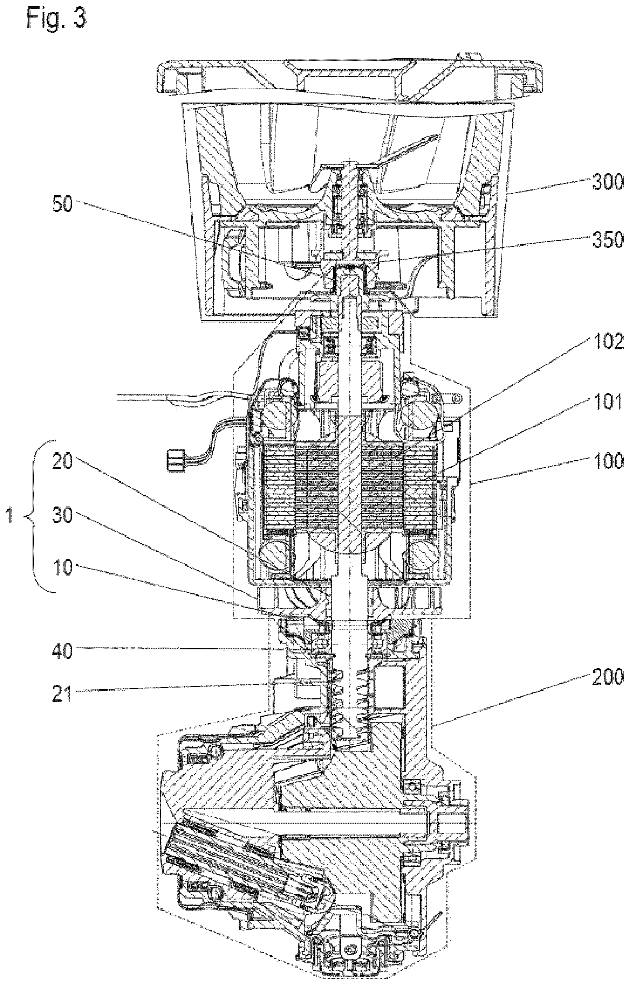

In Figure 1, a motor assembly 1 according to an exemplary embodiment of the present invention is shown in an exploded view. The motor assembly 1 comprises an impeller 30, and a motor holder 10 for connecting, in its mounted state, an electric motor with a gear unit of a kitchen appliance (as shown in Figure 3). The motor assembly 1 further comprises a rotor shaft 20, only an end portion of which is depicted in Figure 1, the end portion comprising a worm 21 for driving the gear unit. While the impeller 30 and the motor holder 10 are shown, in Figure 1, in perspective view, to illustrate an orifice O formed in the rotor shaft 20, said portion of the rotor shaft 20 is shown in a longitudinal cross section along its longitudinal centre axis being a designated axis X or rotation. In particular, as thereby apparent from Figure 1, the orifice O runs in radial direction with respect to the designated axis X of rotation, and in the embodiment depicted, it even is a through-hole radially crossing the rotor shaft 20. By chamfered regions Ca in its edge, the orifice O widens radially outwards, which eases introduction of a tool.

The rotor shaft 20 may comprise at least one further orifice (not visible in Figure 1) likewise running in radial direction, possibly being a further radial through-hole crossing the rotor shaft 20, which further through-hole may preferably cross the through-hole being the orifice O.

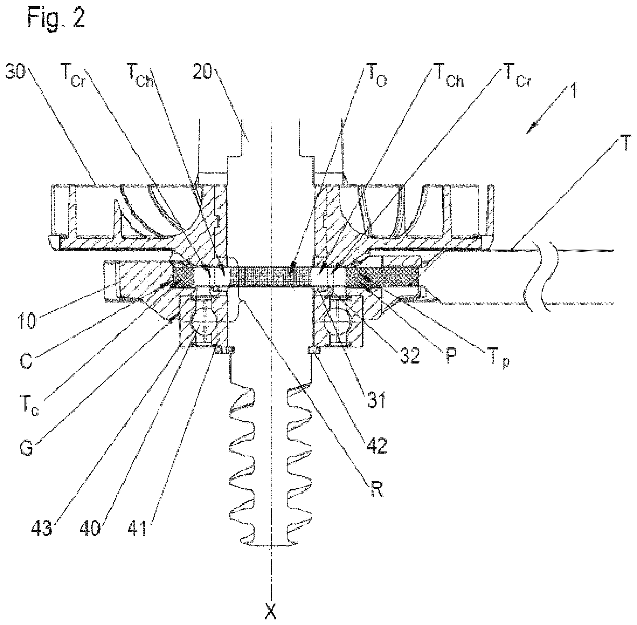

The motor holder 10 forms a hole H configured to be run through by the rotor shaft 20 (as mentioned above, such hole is also referred to herein as "main" hole of the motor holder). Accordingly, the rotor shaft 20 is intended to run, in the mounted state of the motor holder, through the main hole H, such that the rotor shaft's designated axis X of rotation coincides with the centre axis X of the main hole H. In a such assembled state (illustrated in Figure 2), a seat region R of the rotor shaft 20 is arranged within the main hole H of motor holder 10 (which thus encompasses said seat region R). A circumferential notch N formed in the rotor shaft serves to receive a circlip 42 for axially supporting a radially inner race 41 of a rolling-element bearing 40, as illustrated in Figure 2. Therein, in the embodiment depicted in Figure 2, a radially outer race 43 of the rolling-element bearing 40 is arranged in a groove G the motor holder 10 forms at an enclosure of the main hole H. In particular, at least a portion of the radially inner race 41 is arranged, in the assembled state, within the main hole H.

As further seen in Figure 1, the motor holder 10 forms a passage P running through an annular enclosure 11 of the main hole, thereby providing a radial connection of the centre axis X of the main hole with a vicinity of the motor holder 10. Radially outwards of the passage P, in particular of the main hole's enclosure 11, the motor holder 10 forms an introductory path I which is shaped as a duct which is open in one axial direction.

Moreover, in the embodiment depicted, diametrically opposed to the passage P with respect to the centre axis X, a cavity C is formed in the enclosure 11 of the main hole H. As seen in Figure 2, the cavity C is adapted to receive a tip of a tool being inserted through the passage and running through the rotor shaft.

The impeller 30 of the motor assembly 1 is configured to be penetrated by and fixed to the rotor shaft 20 and to thus be driven by the rotor shaft 20. As further seen in Figure 1, the impeller comprises a sleeve 31 configured to at least partially be arranged, in the assembled state of the motor assembly 1, within the main hole H of the motor holder 10. In particular, in the assembled state, the sleeve 31 thus surrounds a portion of the seat region R the rotor shaft 20.

In the embodiment shown in Figure 1, the sleeve 31 forms four channels, of which only channels Ch₁, Ch₂, Ch₃ are visible, due to the perspective of Figure 1. Respectively two of the channels are formed diametrically opposed to each other (with respect to the designated axis X of rotation), wherein the respective diameters run orthogonal to each other. In particular, the sleeve is 4-fold rotationally symmetric (i.e., rotationally symmetric of fourth order). It is partially covered by a ring-shaped cover 32; in particular, said cover 32, which serves to protect the sleeve 31 during a process of assembling the impeller 30, covers the sleeve 31 in radial direction and at the sleeve's axial end facing the motor holder 10. Advantageously, the cover 32 is at least partially made of metal.

The cover 32 forms four clearances, of which only clearances Cr₁, Cr₂ are visible, due to the perspective of Figure 1 and which each overlap a respective one of the channels Ch₁, Ch₂, Ch₃.

As can be taken from Figure 2, the impeller 30 is fixed to the rotor shaft 20 such that at least two of the channels Ch₁, Ch₂, Ch₃ meet the at least one orifice O in the rotor shaft. As a consequence, a straight tool T such as a rod (in particular a shaft of a screw driver) is facilitated to run through the cover 32 and the sleeve 31 of the impeller into the orifice O.

As further seen in Figure 1, the impeller 30 comprises four guiding ribs 33 each extending radially from a vicinity of the sleeve 31 to a respective one of the channels Ch₁, Ch₂, Ch₃. When in the assembled state of the motor assembly said tool is being inserted radially from a vicinity of the motor holder 10 through the passage P thereof, and if the rotor shaft 20 with the impeller 30 fixed thereto is rotated in an appropriate rotational position (in which one of the channels Ch₁, Ch₂, Ch₃ superimposes the respective passage P and another one superimposes the cavity C), a respective one of said ribs 33 serves to guide a tip of the tool into said channel Ch₁, Ch₂, Ch₃.

In its periphery, the impeller 30 has marks M₁, M₂, M₃, M₄ which each are positioned on a same diameter as a respective one of the channels Ch₁, Ch₂, Ch₃. Accordingly, when the motor assembly is assembled and installed in a kitchen appliance such that - seen from a radial vicinity of the motor holder - the sleeve 31 is hidden, the marks M₁, M₂, M₃, M₄ indicate a rotational position of the impeller 30. They thus enable a user to rotate the rotor shaft 20 with the impeller 30 so as to turn the at least one of the channels Ch₁, Ch₂, Ch₃ in line with the passage P of the motor holder 10. In such position of the rotor shaft 20 and the motor holder 10 relative to each other, a straight tool can be inserted from a vicinity of the motor holder 10 through the passage P and into (or even through) the orifice O of the rotor shaft 20. The tool may then facilitate holding the rotor shaft 20 when a drive clutch is unscrewed therefrom and/or screwed thereon.

In the embodiment shown in Figure 1, the marks M₁, M₂, M₃, M₄ each are configured as a respective groove running in axial direction (with respect to the designated axis X or rotation). Thereby, the marks M₁, M₂, M₃, M₄ also ease alignment of the channels Ch₁, Ch₂, Ch₃ with the orifice O of the rotor shaft 20 when the impeller 30 is fixed thereto during production of the electric motor. Moreover, said marks M₁, M₂, M₃, M₄ serve to hold the impeller 30 (e.g., with an appropriate holding means) in its position relative to the motor holder 10 when inserting said straight tool.

As mentioned above, Figure 2 shows, in a cross section along the designated axis X of rotation, a situation in which such tool T has been inserted from a vicinity of the motor holder 10 through the motor holder 10, the sleeve 31 (and its cover 32) of the impeller 30, and the rotor shaft 20. Accordingly, as indicated in Figure 2, a section T_{P} abuts the surfaces of the motor holder 10 and runs through the passage P formed therein, sections T_{Cr} each run through a respective one of two diametrically opposed clearances in the cover 32 of the impeller's sleeve 31, two sections T_{Ch} each run through a respective one of two diametrically opposed channels of the sleeve 31, a section T_{O} runs through the orifice (being a through-hole) of the rotor shaft 20, and a section T_{C} (being a tip of the tool T) extends into the cavity C. Thereby, a rotation of the rotor shaft 20 relative to the motor holder 10 (and thereby, to the gear unit the motor holder may be mounted to) is comfortably and reliably inhibited, such that a drive clutch screwed on the rotor shaft (not shown in Figure 2) can be easily and quickly replaced without compromising other component of the kitchen appliance.

In Figure 3, a portion of an exemplary embodiment of a kitchen appliance according to the present invention is shown in a sectional view. The kitchen appliance comprises an electric motor 100 with a stator 101 and a rotor 102, the rotor 102 mounted on a rotor shaft 20 of a motor assembly 1 according to an embodiment of the present invention. By means of a motor holder 10 of said motor assembly 1, the electric motor 100 is connected to a gear unit 200 to be driven by a worm 21 formed at an end of the rotor shaft 20.

In the embodiment shown in Figure 3, the kitchen appliance is a kitchen machine comprising a blender attachment 300 which is configured to be driven by the electric motor 100 via the rotor shaft 20. To this end, the rotor shaft 20 is coupled to the blender attachment 300 by a drive clutch 50 engaging with a blender's (counter)clutch 350.

Due to high loads and vibrations often occurring during operation of such blender attachment 300, the drive clutch 50 is prone to abrasion and damages and therefore needs to be replaced from time to time. As explained above, the present invention facilitates such replacement in a convenient, safe and fast way, as it allows for an easy rotational fixation of the rotor shaft by introducing a straight tool. With such a rotational fixation, the drive clutch 50 can be easily screwed on or from the rotor shaft.

The invention concerns a motor holder 10 for connecting, in a mounted stage, an electric motor 100 with a gear unit 200 of a kitchen appliance. The motor holder 10 forms a main hole H configured to be run through, in the mounted stage of the motor holder, by a rotor shaft 20 of the electric motor. Moreover, the motor holder forms at least one passage P running through an enclosure 11 of the main hole H.

The invention further concerns a rotor shaft 20 designated to run through a main hole H of a motor holder 10 for connecting an electric motor 100 with a gear unit 200 of a kitchen appliance. Therein, at least one orifice O is formed in the rotor shaft 20.

Moreover, the invention concerns a motor assembly 1 with a motor holder 10 and a rotor shaft 20, an electric motor 100, and a kitchen appliance.

### Reference signs

- 1: motor assembly

- 10: motor holder
- 11: enclosure of main hole
- 20: rotor shaft
- 21: worm
- 30: impeller
- 31: sleeve
- 32: cover
- 33: guiding rib

- 40: rolling-element bearing
- 41: radial inner race of rolling-element bearing 40
- 42: circlip
- 50: drive clutch

- 100: electric motor
- 101: stator
- 102: rotor
- 200: gear unit
- 300: blender attachment
- 350: blender's clutch

- C: cavity
- Ca: chamfered region
- Ch₁, Ch₂, Ch₃: channel
- Cr₁, Cr₂: clearance
- G: groove
- H: main hole
- I: introductory path
- M₁, M₂, M₃, M₄: mark
- N: notch
- O: orifice
- P: passage
- R: seat region
- T: tool
- T_{C}, T_{Ch}, T_{Cr}, T_{O}, T_{P}: sections of tool T
- X: centre axis of main hole H; designated axis of rotation

## Claims

1. Motor holder (10) for connecting, in a mounted state, an electric motor (100) with a gear unit (200) of a kitchen appliance, the motor holder (10) forming a main hole (H) configured to be run through, in the mounted state of the motor holder, by a rotor shaft (20) of the electric motor,
**characterized in that** the motor holder (10) further forms a passage (P) for accessing the main hole (H) and a rotor shaft with a tool, wherein the passage (P) runs through an enclosure (11) of the main hole (H), the passage (P) is configured to be aligned with the at least one orifice (O) in the rotor shaft (20) for inserting a tool through both the passage (P) and the at least one orifice (O).

2. Motor holder according to claim 1, wherein in a position which with respect to a centre axis (X) of the hole (H) is diametrically opposed to the passage (P), a cavity (C) is formed in the enclosure (11) of the main hole (H).

3. Rotor shaft (20) for an electric motor (100) for a kitchen appliance, the rotor shaft (20) configured to run through a main hole (H) of a motor holder (10) and configured to connect the electric motor (100) with a gear unit (200) for the kitchen appliance, wherein at least one orifice (O) is formed in the rotor shaft (20) and **characterized in that** the at least one orifice (O) is formed in a seat region (R) or adjacent to a seat region (R) of the rotor shaft (20), the seat region (R) configured to be arranged in said main hole (H) of the motor holder (10), the at least one orifice (O) is configured to be aligned with the passage (P) in the motor holder (10) for inserting a tool through both the at least one orifice (O) and the passage (P).

4. Rotor shaft according to one of claims 3, wherein with respect to a designated axis (X) of rotation, the orifice (O) is a radial through-hole running through the rotor shaft (20).

5. Motor assembly (1) comprising
- a motor holder (10) according to one of claims 1 or 2, and
- an associated rotor shaft (20) according to one of claims 3 to 4,
wherein the at least one orifice (O) is adapted to meet, by rotation of the rotor shaft (20) in the motor holder's main hole (H) and relative to the motor holder (10), the passage (P) formed in the motor holder (10).

6. Motor assembly (1) according to claim 5, further comprising an impeller (30) with a sleeve (31) fixed to the rotor shaft (20), the sleeve (31) forming at least one channel (Ch₁, Ch₂, Ch₃) superimposing the at least one orifice (O) of the rotor shaft (20).

7. Motor assembly according to claim 6, wherein the impeller comprises a ring-shaped cover (32) covering at least a portion of the sleeve (31), wherein the cover (32) has at least one clearance (Cr₁, Cr₂) overlapping the at least one channel (Ch₁, Ch₂, Ch₃).

8. Motor assembly according to one of claims 6 or 7, wherein the impeller (30) comprises at least one guiding rib (33) extending radially from a vicinity of the sleeve to the at least one channel (Ch₁, Ch₂, Ch₃).

9. Motor assembly according to one of claims 6 to 8, wherein the impeller (30) has one or more mark/s (M₁, M₂, M₃, M₄) on its perimeter.

10. Electric motor (100) comprising a stator (101), a rotor (102), and a motor assembly (1) according to one of claims 5 to 9, the rotor (102) being fastened to the rotor shaft (20) of the motor assembly (1).

11. Kitchen appliance comprising an electric motor (100) according to claim 10, and a gear unit (200) configured to be driven by the electric motor (100).

## Patentansprüche

1. Motorträger (10) zum Verbinden eines Elektromotors (100) mit einer Getriebeeinheit (200) eines Küchengeräts im montierten Zustand, wobei der Motorträger (10) ein Hauptloch (H) bildet, das so konfiguriert ist, dass im montierten Zustand des Motorträgers eine Rotorwelle (20) des Elektromotors dort hindurch verläuft,
**dadurch gekennzeichnet, dass**
der Motorträger (10) ferner einen Durchgang (P) für den Zugang zum Hauptloch (H) und einer Rotorwelle mit einem Werkzeug bildet, wobei der Durchgang (P) durch eine Einfassung (11) des Hauptlochs (H) verläuft, wobei der Durchgang (P) so konfiguriert ist, dass er zum Einführen eines Werkzeugs durch den Durchgang (P) sowie die mindestens eine Öffnung (O) auf die mindestens eine Öffnung (O) in der Rotorwelle (20) ausgerichtet werden kann.

2. Motorträger nach Anspruch 1, wobei in einer Position in Bezug auf eine Mittelachse (X) des Lochs (H), die dem Durchgang (P) genau gegenüberliegt, in der Einfassung (11) des Hauptlochs (H) eine Aussparung (C) ausgebildet ist.

3. Rotorwelle (20) für einen Elektromotor (100) für ein Küchengerät, die so konfiguriert ist, dass sie durch ein Hauptloch (H) eines Motorträgers (10) verläuft und dass sie den Elektromotor (100) mit einer Getriebeeinheit (200) des Küchengeräts verbindet, wobei mindestens eine Öffnung (O) in der Rotorwelle (20) ausgebildet ist, und **dadurch gekennzeichnet ist, dass** die mindestens eine Öffnung (O) in oder neben einem Sitzbereich (R) der Rotorwelle (20) ausgebildet ist, wobei der Sitzbereich (R) so konfiguriert ist, dass er in dem Hauptloch (H) des Motorträgers (10) angeordnet werden kann, wobei die mindestens eine Öffnung (O) so konfiguriert ist, dass sie zum Einführen eines Werkzeugs durch die mindestens eine Öffnung (O) sowie den Durchgang (P) auf den Durchgang (P) in dem Motorträger (10) ausgerichtet werden kann.

4. Rotorwelle nach einem der Ansprüche 3, wobei es sich bei der Öffnung (O) in Bezug auf eine entsprechende Rotationsachse (X) um ein durch die Rotorwelle (20) verlaufendes, radiales Durchgangsloch handelt.

5. Motorbaugruppe (1), die Folgendes umfasst:
- einen Motorträger (10) nach Anspruch 1 oder 2 und
- eine zugehörige Rotorwelle (20) nach einem der Ansprüche 3 bis 4,
wobei die mindestens eine Öffnung (O) so ausgelegt ist, dass sie durch Drehen der Rotorwelle (20) im Hauptloch (H) des Motorträgers und in Bezug auf diesen mit dem im Motorträger (10) ausgebildeten Durchgang (P) zusammentrifft.

6. Motorbaugruppe (1) nach Anspruch 5, die ferner ein Flügelrad (30) mit einer Hülse (31) umfasst, welche an der Rotorwelle (20) fixiert ist, wobei die Hülse (31) mindestens einen Kanal (Ch₁, Ch₂, Ch₃) bildet, der über der mindestens einen Öffnung (O) der Rotorwelle (20) liegt.

7. Motorbaugruppe nach Anspruch 6, wobei das Flügelrad eine ringförmige Abdeckung (32) umfasst, die zumindest einen Teil der Hülse (31) abdeckt, wobei die Abdeckung (32) mindestens einen Spalt (Cr₁, Cr₂) aufweist, der den mindestens einen Kanal (Ch₁, Ch₂, Ch₃) überlappt.

8. Motorbaugruppe nach Anspruch 6 oder 7, wobei das Flügelrad (30) mindestens eine Führungsrippe (33) umfasst, die aus einer Umgebung der Hülse radial zu dem mindestens einen Kanal (Ch₁, Ch₂, Ch₃) verläuft.

9. Motorbaugruppe nach einem der Ansprüche 6 bis 8, wobei das Flügelrad (30) an seinem Umfang eine oder mehrere Markierungen (M₁, M₂, M₃, M₄) aufweist.

10. Elektromotor (100), der einen Stator (101), einen Rotor (102) und eine Motorbaugruppe (1) nach einem der Ansprüche 5 bis 9 umfasst, wobei der Rotor (102) an der Rotorwelle (20) der Motorbaugruppe (1) befestigt ist.

11. Küchengerät mit einem Elektromotor (100) nach Anspruch 10 und einer Getriebeeinheit (200), die so konfiguriert ist, dass sie von dem Elektromotor (100) angetrieben werden kann.

## Revendications

1. Support de moteur (10) pour relier, à l'état monté, un moteur électrique (100) à un ensemble d'engrenages (200) d'un appareil de cuisine, le support de moteur (10) formant un trou principal (H) agencé pour être traversé, à l'état monté du support de moteur, par un arbre de rotor (20) du moteur électrique,
**caractérisé en ce que**
le support de moteur (10) forme en outre un passage (P) pour accéder au trou principal (H) et à l'arbre de rotor avec un outil, dans lequel le passage (P) traverse une enceinte (11) du trou principal (H), le passage (P) est configuré de manière à être aligné avec l'au moins un orifice (O) dans l'arbre de rotor (20) afin d'insérer un outil à travers à la fois le passage (P) et l'au moins un orifice (O).

2. Support de moteur selon la revendication 1, dans lequel, dans une position qui, par rapport à un axe central (X) du trou (H), est diamétralement opposée au passage (P), une cavité (C) est formée dans l'enceinte (11) du trou principal (H).

3. Arbre de rotor (20) pour un moteur électrique (100) pour un appareil de cuisine, l'arbre de rotor (20) étant configuré pour traverser un trou principal (H) d'un support de moteur (10) et configuré pour relier le moteur électrique (100) à un ensemble d'engrenages (200) pour l'appareil de cuisine, dans lequel au moins un orifice (O) est formé dans l'arbre de rotor (20) et **caractérisé en ce que** l'au moins un orifice (O) est formé dans une zone d'appui (R) ou à proximité d'une zone d'appui (R) de l'arbre de rotor (20), la zone d'appui (R) étant configurée pour être agencée dans ledit trou principal (H) du support de moteur (10), l'au moins un orifice (O) est configuré pour être aligné avec le passage (P) dans le support de moteur (10) afin d'insérer un outil à travers à la fois l'au moins un orifice (O) et le passage (P).

4. Arbre de rotor selon la revendication 3, dans lequel, par rapport à un axe de rotation désigné (X), l'orifice (O) est un trou traversant radial s'étendant à travers l'arbre de rotor (20).

5. Ensemble moteur (1) comprenant
- un support de moteur (10) selon l'une des revendications 1 ou 2, et
- un arbre de rotor associé (20) selon l'une des revendications 3 et 4,
dans lequel l'au moins un orifice (O) est adapté pour venir en coïncidence, par rotation de l'arbre de rotor (20) dans le trou principal (H) du support de moteur et par rapport au support de moteur (10), avec le passage (P) formé dans le support de moteur (10).

6. Ensemble moteur (1) selon la revendication 5, comprenant en outre une roue (30) avec un manchon (31) fixé à l'arbre de rotor (20), le manchon (31) formant au moins un canal (Ch₁, Ch₂, Ch₃) se superposant à l'au moins un orifice (O) de l'arbre de rotor (20).

7. Ensemble moteur selon la revendication 6, dans lequel la roue comprend un couvercle de forme annulaire (32) couvrant au moins une partie du manchon (31), dans lequel le couvercle (32) a au moins un jeu (Cr₁, Cr₂) chevauchant l'au moins un canal (Ch₁, Ch₂, Ch₃).

8. Ensemble moteur selon l'une des revendications 6 ou 7, dans lequel la roue (30) comprend au moins une nervure de guidage (33) s'étendant radialement depuis un voisinage du manchon jusqu'à l'au moins un canal (Ch₁, Ch₂, Ch₃).

9. Ensemble moteur selon l'une des revendications 6 à 8, dans lequel la roue (30) a un ou plusieurs repères (M₁, M₂, M₃, M₄) sur son périmètre.

10. Moteur électrique (100) comprenant un stator (101), un rotor (102) et un ensemble moteur (1) selon l'une des revendications 5 à 9, le rotor (102) étant fixé à l'arbre de rotor (20) de l'ensemble moteur (1).

11. Appareil de cuisine comprenant un moteur électrique (100) selon la revendication 10, et un ensemble d'engrenages (200) configuré pour être entraîné par le moteur électrique (100).
